# EUROPEAN PATENT APPLICATION

(11) **EP 0 984 597 A2**
(43) Date of publication of application: **08.03.2000**
(21) Application number: 99114871.9
(22) Date of filing: 29.07.1999
(51) Int. Cl.: H04L 29/06

(54) **Communication device and method for inputting communication conditions**

(30) Priority: 31.08.1998 JP 24427098
(71) Applicant: Sharp Kabushiki Kaisha, Osaka-shi Osaka (JP)
(72) Inventor: Matsuda, Eichika, Yamatotakada-shi, Nara (JP); Isoe, Toshio, Tenri-shi, Nara (JP)
(74) Representative: MÜLLER & HOFFMANN Patentanwälte

(57) **Abstract**

To provide a communication device wherein the necessary communication conditions can be easily set by a user who is a beginner having no knowledge how to set the necessary conditions, the communication device connectable with another communication device over a communication line is composed of a display means (2) for displaying a menu for inputting communication conditions, a condition input means (4) for inputting communication conditions according to menu options and instruction, a storage means (7, 8) for storing communication conditions inputted by the condition input means (4), a communication instruction means for instructing beginning of communication, a detection means (6-3) for detecting a state of conditions stored in the storage means, and a control means (6) for controlling the communication device to begin communication under the conditions stored and detected by the detecting means (6-3) or drive the display means (2) to display a menu for inputting communication conditions when the absence of the preset communication conditions is detected.

## Description

### BACKGROUND OF THE INVENTION

The present invention relates to a communication device and a related communication method, which are capable of communicating with another communication device over Internet or personal computer communication, and more particularly to a communication device and method, which allow a user to easily conducting a variety of settings necessary for establishing communications.

As the variety of setting of communication device, for example. Japanese Laid-open Patent Publication No. 59-23943 discloses a system and method for controlling a communication interface circuit according to communication conditions, wherein communication conditions have been set, stored and displayed on a display screen through which a operator can change current settings, if necessary, by inputting desired settings.

Japanese Laid-open Patent Publication No. 2-135947 discloses a method for detecting a state of a communication device when setting functions and displaying a menu for setting working conditions in accordance with the detected state of the device.

The above conventional arts, however, involve the following problems:

In case when necessary communication conditions have not been preset, a user has to conduct setting of communication conditions by previously changing a current mode to a setting mode with referring to an instruction manual. She or he may not conduct communication if the setting screen could not be presented.

The presentation of a menu in compliance with the detected state of the device when setting functions may not sufficiently help beginning users who do not know how to set the communication conditions. Accordingly, they must study first the instruction manual of the device and may always consult the manual being kept close at hand.

Furthermore, the prior arts can only indicate an error message if a user failed in setting conditions necessary for beginning the communication. In this case, the user must cancel the communication and conducts setting of the conditions again on the setting mode screen.

### SUMMARY OF THE INVENTION

Accordingly, the present invention is directed to a communication device and method, by which the communication is automatically started with a communication start instruction if conditions least necessary for conducting the communication are preset and stored and a menu screen for inputting the necessary communication conditions automatically displayed if the conditions are not stored.

An object of the present invention is to provide a communication device, which can be connected with another communication device over a communication line and comprises a display means for displaying a menu for inputting communication conditions, a condition input means for inputting communication conditions according to an instruction of the menu displayed by the display means, a storage means for storing communication conditions inputted by the condition input means, a communication instruction means for instructing beginning of communication, a detection means for detecting a state of conditions stored in the storage means according to an instruction of beginning of communication from the communication instruction means and a control means for controlling the communication device to begin communication under the conditions stored and detected by the detection means or drive the display means to display a menu for inputting communication conditions if the absence of preset communication conditions is detected.

Another object of the present invention is to provide a communication device which has the same construction as the above device has and is further characterized in that a state of stored communication conditions is detected by a state of a flag set when storing communication conditions in the storage means.

Another object of the present invention is to provide a communication method for communication with another communication device, which method comprises a displaying step of displaying a menu for inputting communication conditions; a condition inputting step of inputting communication conditions according to instruction of the menu; a storing step of storing communication conditions inputted at the condition inputting step; a communication instructing step of instructing beginning of communication; and a detecting step of detecting a state of conditions stored at the storing step according to an instruction of beginning of communication at the communication instructing step, and controls the beginning of communication under the conditions stored and detected at the detecting step or conducting of the displaying step to display a menu for inputting communication conditions when the absence of preset communication conditions is detected.

Still another object of the present invention is to provide a communication method which is comprises the same steps as those of the above method and further characterized in that a state of stored communication conditions is detected by a state of a flag set when storing communication conditions at the storing step.

### BRIEF DESCRIPTION OF DRAWINGS

Fig. 1 is a schematic block-diagram showing a construction of a communication device according to an embodiment of the present invention.
Fig. 2 shows an initial screen according to the embodiment of the present invention.
Fig. 3 shows a menu screen for an electronic mail application for carrying-out of the mail-sending-and-receiving operation according to the embodiment of the present invention.
Fig. 4 shows a menu screen for an electronic mail application for carrying-out of the mail-sending-and-receiving operation according to the embodiment of the present invention.
Fig. 5 shows a display screen for selecting a provider's name according to the embodiment of the present invention.
Fig. 6 shows a display screen for selecting a provider's name according to the embodiment of the present invention.
Fig. 7 shows a display screen for inputting a connection address name according to the embodiment of the present invention.
Fig. 8 shows a display screen for inputting a reading in Japanese pronunciation of the connection address name according to the embodiment of the present invention.
Fig. 9 shows a display screen for inputting an access point according to the embodiment of the present invention.
Fig. 10 shows a display screen for inputting a connection ID according to the embodiment of the present invention.
Fig. 11 shows a display screen for inputting a password according to the embodiment of the present invention.
Fig. 12 shows a display screen for setting condition of password inputting according to the embodiment of the present invention.
Fig. 13 shows a display screen for inputting a mail account according to the embodiment of the present invention.
Fig. 14 shows a display screen for inputting password for a mail account according to the embodiment of the present invention.
Fig. 15 shows a display screen for inputting a mail address according to the embodiment of the present invention.
Fig. 16 shows a display screen for confirmation of the contents of setting according to the embodiment of the present invention.
Fig. 17 is illustrative of a display screen image for confirming the completion of settings according to an embodiment of the present invention.
Fig. 18 is illustrative of a display screen image after completion of the Internet connection setting for carrying-out the mail-sending-and-receiving operation according to an embodiment of the present invention.
Fig. 19 is a flow chart describing communication processing according to an embodiment of the present invention.

### PREFERRED EMBODIMENTS OF THE INVENTION

The preferred embodiments of the present invention will be described in detail with reference to the accompanying drawings.

The present invention, however, is not limited to the shown embodiment.

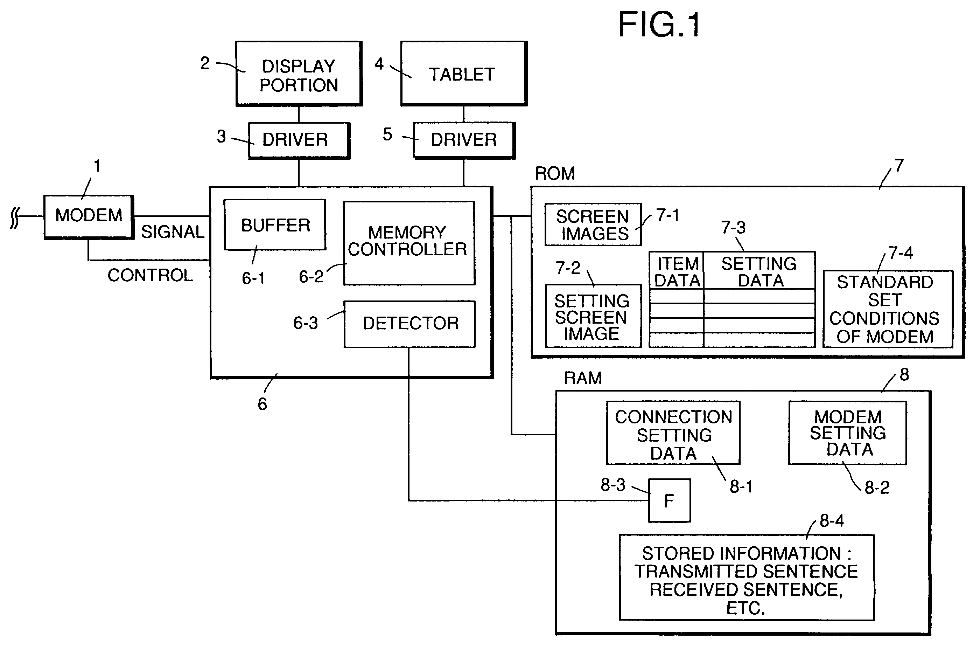

Fig. 1 is a schematic block-diagram showing a construction of a communication device embodying the present invention. In Fig. 1, the modem 1 connected to a communication line is used for converting output data transmitted from the communication device into an analog signal for data communication and converting input data transmitted from a distant external terminal into digital signal processable by the communication device. Namely, it serves as an interface linking the communication device to the communication line such as to transmit and receive an electronic mail and data outgoing and incoming over the Internet communication line.

A control portion 6 of the communication device is connected to the modem 1 with a signal line for exchanging data between them and a control line for driving the modem 1.

A display portion 2 is a thin LCD device capable of displaying characters through a matrix system.

A driver 3 stores therein a bit map representing dot positions for lighting the LCD and drives the display portion 2.

A tablet 4 is a touch-sensitive panel having a size covering a display portion 2. This tablet has two transparent sheets having transparent electrodes formed each on respective inside surfaces and normally separated from each other by small protrusions formed in a regular order on the inside surface of each sheet. The transparent electrodes are bridged by a touch of a finger or a pen and a selected area is detected by the tablet 4.

The areas selectable on the tablet 4 correspond to areas of an image presentable on the display portion 2. Hence, the tablet can also detect an area selected by a user on the display portion 2.

A driver 5 is used for getting coordinate information from the tablet 4. The driver 5 is connected to transparent electrodes of respective transparent sheets of the tablet 4 and converts a position touched by finger or a pen on the tablet 4 into coordinate data of a contact between two electrodes.

A control portion 6 is used for control of input information and output information according to command signals.

A ROM (Read Only Memory) 7 consists of a screen memory 7-1 storing screen-images to be displayed on a screen of the display portion 2, a setting screen memory 7-2 storing screen images to be used when setting parameters for connection to the Internet in a connection assisting (instructing) mode, a preset content memory 7-3 storing setting items and corresponding contents, a modem standard setting memory 7-4 storing standard setting contents of modem 1 and a memory (not shown) storing a control program for driving a variety of applications.

A RAM (Random Access Memory) 8 includes a connection setting memory 8-1 for storing a content of connection settings such as a called subscriber name and a telephone number set by a user and a modem setting memory 8-2 for storing a content of modem settings such as a bit rate, parity, bit length and others set by the user. The memory 8-2 contains initial values that are copied from the modem standard setting contents of the ROM 7 and can be updated by the user as necessary. The RAM 8 also has a flag 8-3 that is set to indicate the presence of least necessary settings made by the user in the memory 8-1 and stored information memory 8-4 for storing a variety of data information such as sending and receiving sentences, schedule information, address list and so on.

The flag 8-3 is set to "1" in the presence of the least necessary connection settings.

The content of the ROM 7 can be fetched as necessary therefrom into a buffer 6-1 by a memory controller (memory control portion) 6-2.

The content of the RAM 8 can be fetched as necessary therefrom into a buffer 6-1 by the memory control portion 6-2. The content of the buffer 6-2 can also be written into the RAM 8 by the memory control portion 6-1.

With a communication start command inputted by a user, the control portion 6 causes the detection portion 6-3 to examine whether the flag 8-3 is set to "1", then it gives the memory control portion 6-2 a signal indicating the completeness of settings when the flag is "1".

The memory control portion 6-2 fetches the contents of the connection setting memory 8-1 and the modem setting memory 8-2 of the RAM 8, holds the fetched data in the buffer 6-1 and starts the communication through the modem 1 according to the fetched data. In this instance, the device starts transmission of a sentence previously selected from the stored information memory 8-4 or receiving information from a distant device to which the connection is established.

A detector (detection portion) 6-3 generates a signal indicating the absence of settings to give the memory control portion 6-2 the signal if a flag 8-3 of the RAM 8 is not set to "1". In this case, the memory control portion 6-2 that in turn reads out the screen image of the Internet connection-setting assist-mode from the setting screen memory 7-2 of the ROM 7 and displays it on the screen of the display portion 2.

The control portion fetches setting items and corresponding contents from the setting content memory 7-3 of ROM 7 according to the displayed setting screen image.

A user inputs setting data through the setting screen shown on the display portion 2. The control portion receives the setting data from the tablet 4 through the driver 5 and stores the data in the connection setting data memory 8-1.

The memory control portion 6-2 sets the flag 8-3 to "1" when the least necessary data items have been inputted and set in the memory 8-1.

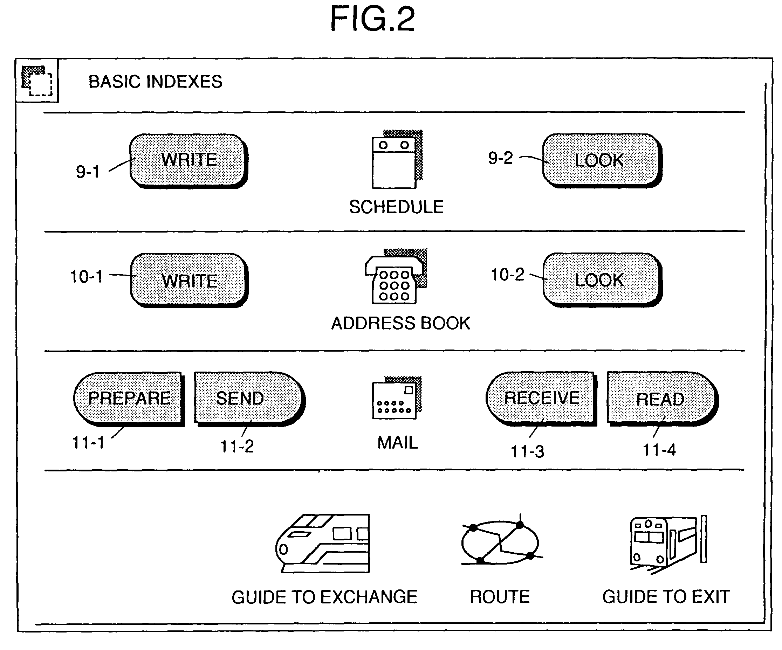

In Fig. 2, there is shown an initial screen image to be displayed on the display portion 2 of the communication device embodying the present invention.

An initial screen image of Fig. 2 is read from the screen image memory 7-1 of Fig. 1 and displayed on the display portion 2 just after turning on the communication device.

In this instance, the initial screen indicates, as basic indexes (menu options), standard functions (a schedule, an address book, electronic mailing, a train exchange guide, etc) to be used on a portable information terminal. Thus, any of applications (functions) shown on the initial screen can be selected and used just after turning on the device.

On the screen of Fig. 2, the user touches a "WRITE" button 9-1 of the schedule application to display a screen of schedule inputting mode allowing the user to input the schedule data.

A schedule data previously stored in the memory can be displayed on a screen of a schedule display mode by touching a "LOOK" button 9-2 of the schedule application on the screen of Fig. 2.

Similarly, the screen mode is turned to an "ADDRESS BOOK" inputting mode for inputting a person's and/or company's name, telephone number and address by touching a "WRITE" button 10-1 of an address-book application.

A address-book data previously stored in the memory can be displayed on a screen of an address display mode by touching a "LOOK" button 10-2 of the schedule application.

For mailing application, four functions can be used. Touching a "PREPARE" button 11-1 causes the device to display a mail-preparing screen on which a user can make a letter to be mailed.

Touching a "SEND" button 11-2 causes the device to connect itself to a preset connection provider of the Internet and send the prepared letter to a desired addressee.

Touching a "RECEIVE" button 11-3 causes the device to connect itself to a preset connector of the Internet and receives a letter transferred to the own mail address by a Host of the connection provider.

By touching a "READ" button 11-4, the user can read the received and stored mail on the display screen of the device.

Buttons shown in an area in the undermost row on the display screen are intended to supply the user with a variety of information such as guide to exchange, a railway map (route) and a guide to exits.

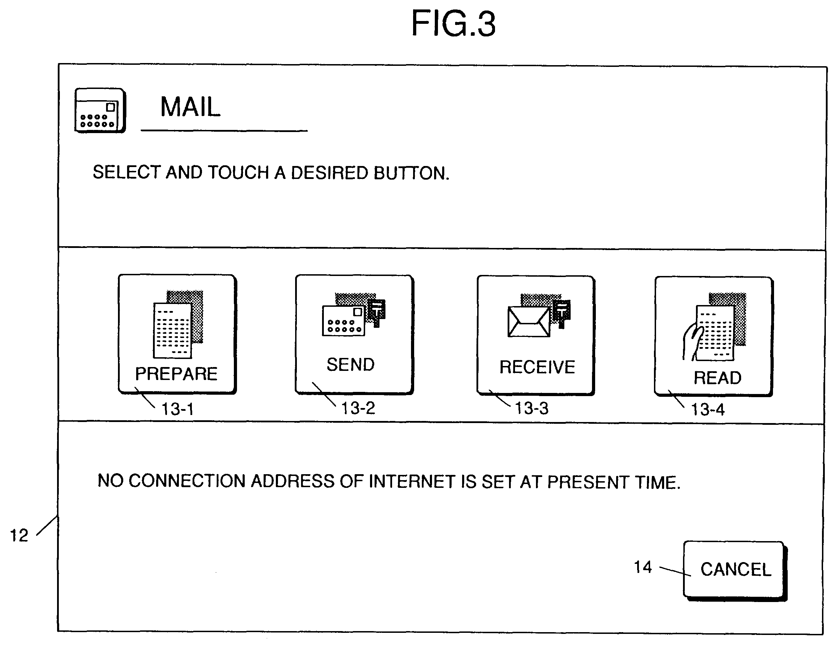

Fig. 3 is shows a menu screen of the mail application through which the user can perform electronic-mail sending/receiving operations in the communication device embodying the present invention.

Electronic mail can be sent to and received from another communication device by using menu option selecting means (not shown) other than the application shown in Fig. 2.

A menu screen of Fig. 3 for mail application appears on the display portion of the communication device when the user selected the mail application by using the menu selecting means (not shown).

The functions of buttons 13-1 to 13-4, shown in this screen, of the mail application, are the same as those of the buttons 11-1 to 11-4 of the mail application of Fig. 2.

Touching a "CANCEL" button 14 causes the device to finish the mail application and restores a preceding screen that was displayed just before opening the mail application.

In this instance, a connection address has not been set for mailing over the Internet and, therefore, a message "No connection address of Internet is set at present time" is displayed in a message area 12 on the display screen.

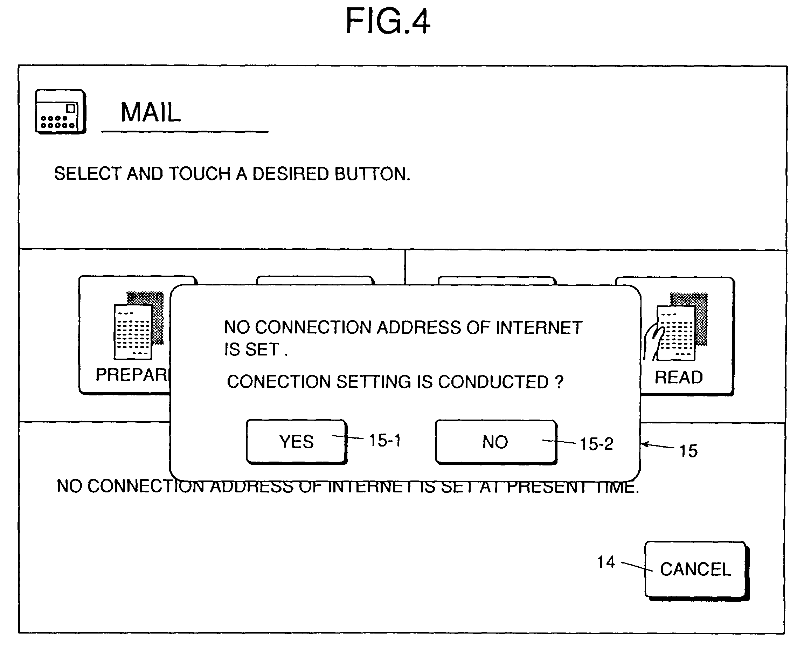

If the "SEND" button 13-2 or the "RECEIVE" button 13-3 was touched by the user on the shown screen, the communication device examines whether the connection address is preset or not. In absence of the preset address data, the device displays a connection-address-setting confirmation screen 15 shown in Fig. 4 inquiring of the user whether he or she wishes to set the connection address.

With a finger touch of the user with a "NO" button 15-2 on the confirmation screen 15, the device closes the screen 15 and restores the screen of Fig. 3. The communication will not be done.

With a finger touch of the user with a "YES" button 15-1 on the confirmation screen 15, the device automatically drives an Internet-Connection-setting assisting mode application.

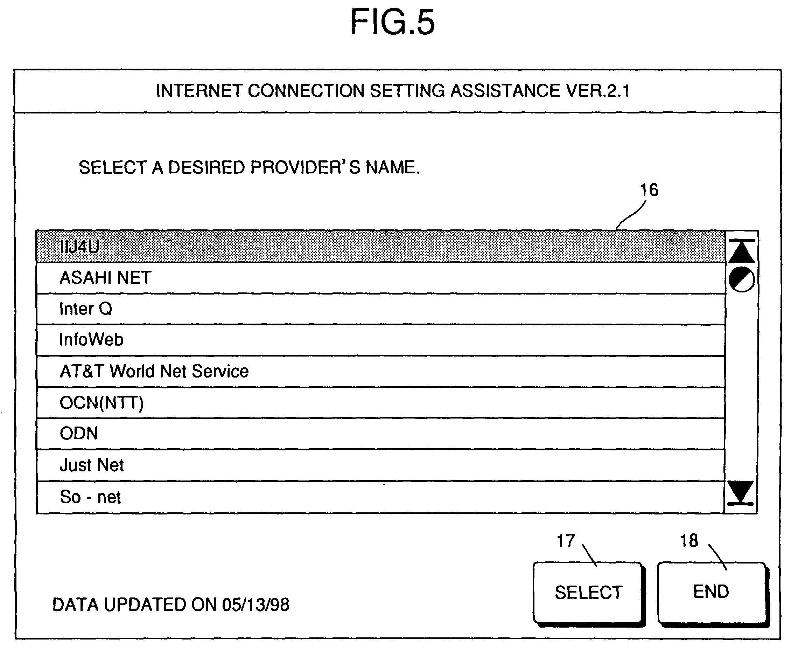

In the Internet-connection-setting assisting mode, a provider's name selecting screen is first presented as shown in Fig. 5. The screen image is formed by synthesizing information read from the setting screen memory 7-2 with information read from the setting content memory 7-3.

In this stage, the user can finish the setting operation by touching a "END" button 18. The screen returns to the mail-application-menu screen of Fig. 3.

In a list 16 of provider's names, the user selects a desired provider by touching its name.

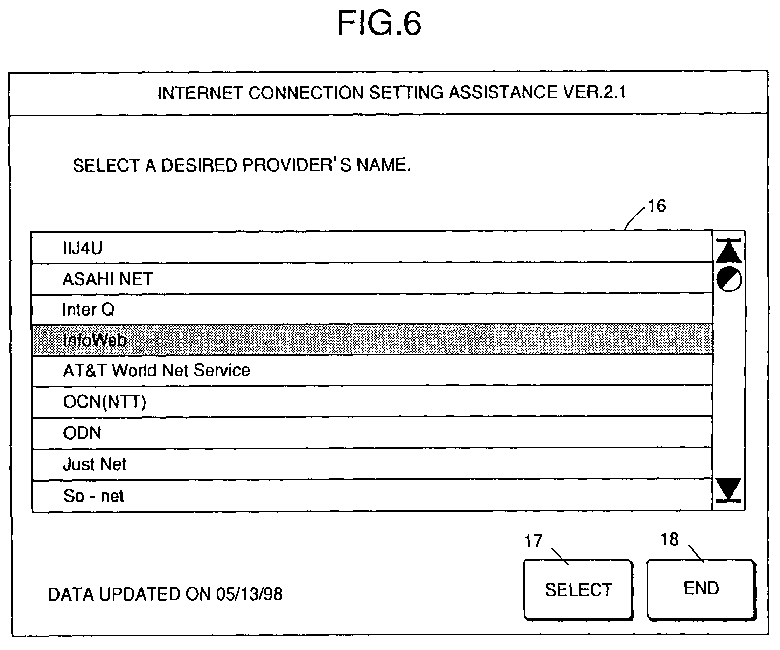

In Fig. 6, the provider "Infoweb" is selected and the area of the provider's name selected by a touch is displayed in an emphasized state.

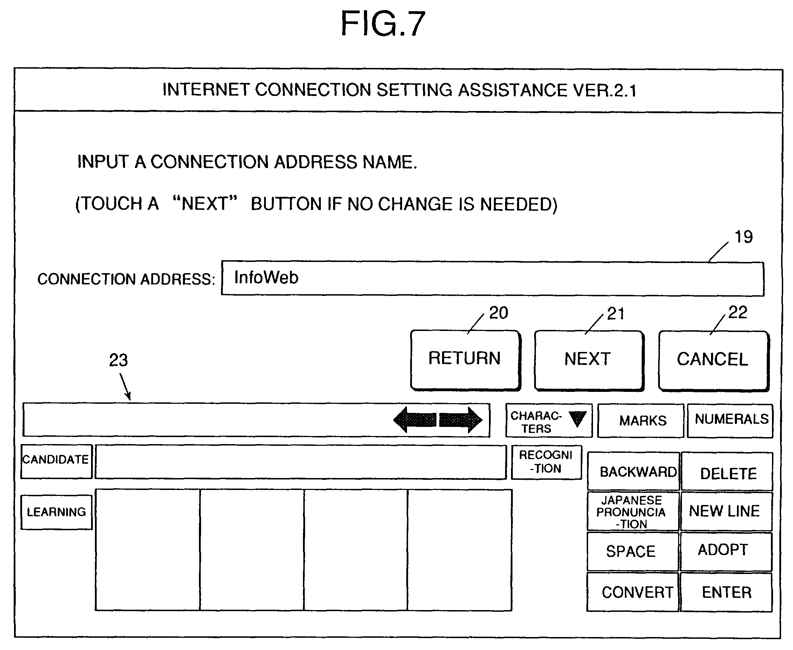

After selection of the desired provider's name, the user touches a "SELECT" button 17, thereby causing the device to open a connection-address inputting screen of Fig. 7 for setting details of the connection address.

Information to be displayed hereinafter as default data in a data input area on each screen contains a content of setting data corresponding to a selected item (provider). The user amends the data as necessary.

The user inputs necessary data for the input item and then touches a "SELECT" button (17 in this screen) to select a subsequent screen for advancing setting operation on each screen. The "SELECTED" button is indicated as emphasized with a shadow on each screen.

On the provider's name inputting screen of Fig. 7, the provider's name selected on the preceding screen of Fig. 6 is shown again in a data input area 19. The user can amend it to a different desired name by inputting the new name in the input area 19.

In this instance, the connection provider's name is inputted in a hand-written-character input mode (for hand-written character recognition) by hand-writing of alphabetical letters in the input area of a character inputting board 23.

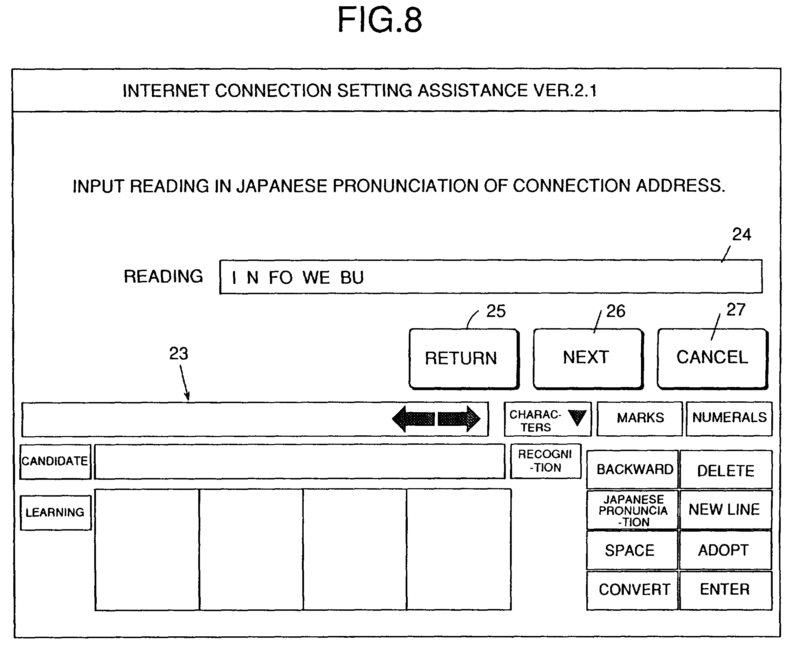

Having recognized there is no need to amend the indicated name, the user touches a "NEXT" button 21 to open an inputting screen of Fig. 8 for inputting the Japanese characters "kana" pronouncing the provider's name.

On the screen of Fig. 7, a "RETURN" button 20 is used for returning to a preceding screen in the Internet connection-setting assisting mode. The use of this button function enables the user to return to a preceding setting state for correcting an error found in setting process at any time before completion of the setting procedure.

A "CANCEL" button 22 is used to cancel the setting procedure in the Internet-connection-setting assisting mode. Touching this button causes the device to cancel the setting procedure and restore the screen that was shown before the Internet-connection-setting assisting application is driven.

"RETURN" and "CANCEL" buttons shown in Figs. 8 to 16 have function similar to those of the "RETURN" and "CANCEL" buttons 20 and 22 of Fig. 7.

On the inputting screen of Fig. 8, the user inputs, in a data inputting area 24, kana characters pronouncing the provider's name selected on the screen of Fig. 6 or amended on the screen of Fig. 7.

In this instance, the character inputting board 23 is of a hand-writing inputting mode in which characters handwritten by the user in the input area is inputted and recognized by the written-character recognition system of the communication device.

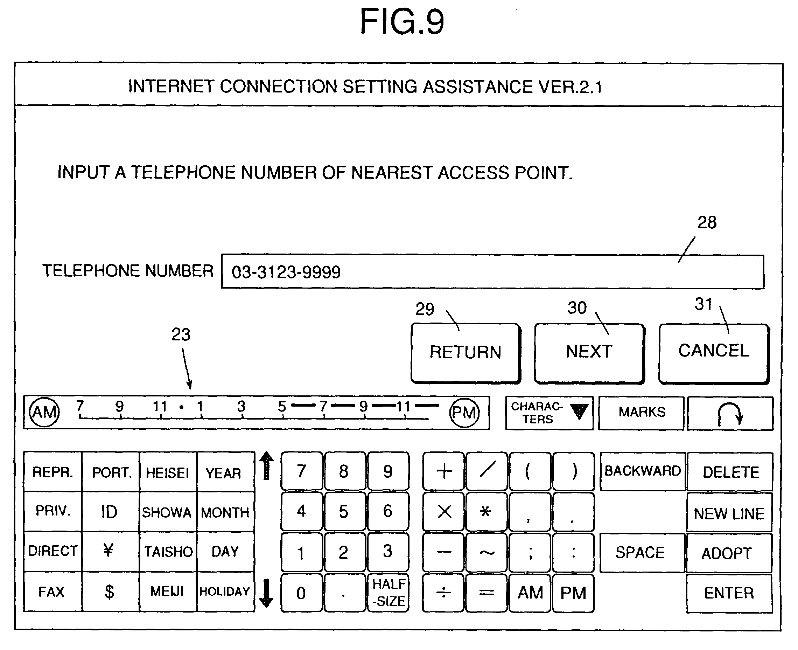

On completion of inputting kana characters, the user touches the "NEXT" button 26 to open an access- point inputting screen shown in Fig. 9.

On the access-point inputting screen of Fig. 9, a telephone number of an access point corresponding to the provider's name selected on the inputting screen of Fig. 6 or amended on the screen of Fig. 7 is inputted by the user in an access-point inputting area of the screen.

On the screen of Fig. 9, a character inputting board 23 has in its center portion a set of numeral keys by which the user can input the telephone number.

In this case, the provider's telephone number is inputted by successively selecting numerals on the numeral keys and a hyphen for dividing number elements.

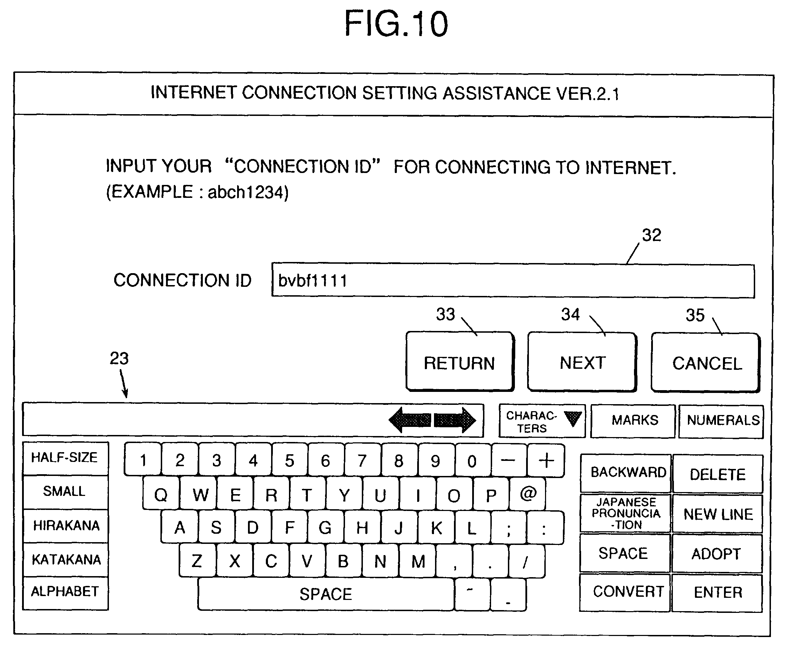

The user touches a "NEXT" button 30 after inputting the telephone number. A connection ID inputting screen of Fig. 10 is now displayed on the display portion of the device.

The connection ID to be input through this screen is a code identifying the user when connecting to the Internet, which identifier was given to the user when concluding the contract with the provider.

On the connection ID inputting screen of Fig. 10, the user inputs the given ID code in a connection ID inputting area 32.

In this instance, the character inputting board 23 is of a typewriter inputting mode enabling the user to write characters in the input area by using the center keyboard thereof.

The use of functional keys "Half-size", "Small (Small size)", "Hirakana (Japanese Hirakana)", "Katakana (Japanese Katakana)" and "Alphabet (Alphabetical Letters)", provided at the leftmost corner of the screen, enables the user to input a variety of characters through the typewriter mode.

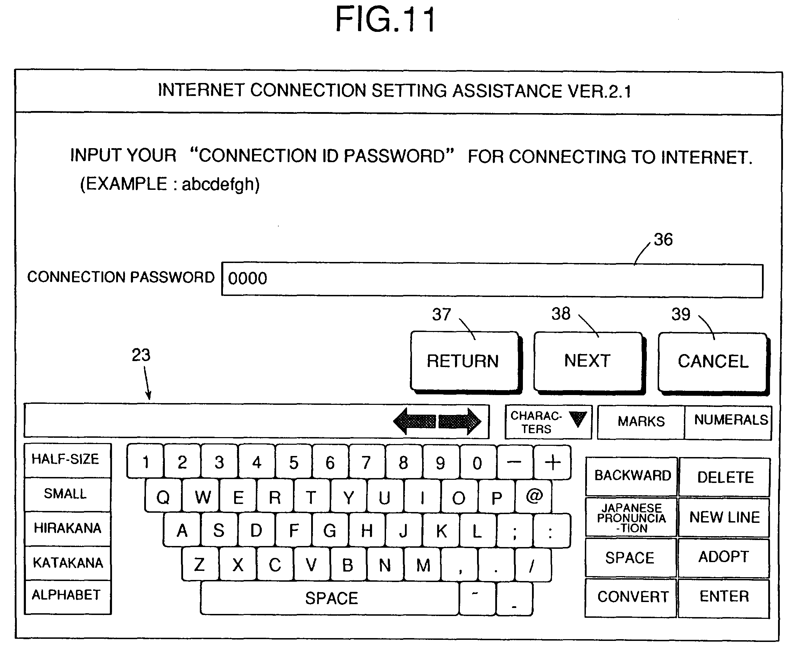

After entering the connection ID, the user touches a "NEXT" button 34 to open a connection ID password inputting screen of Fig. 11.

On the ID password-inputting screen of Fig. 11, the user inputs, in an ID password inputting area 36, a password corresponding to the ID given by the Provider.

In this instance, the character inputting board 23 is of a typewriter inputting mode enabling the user to write characters in the input area by using the center keyboard thereof.

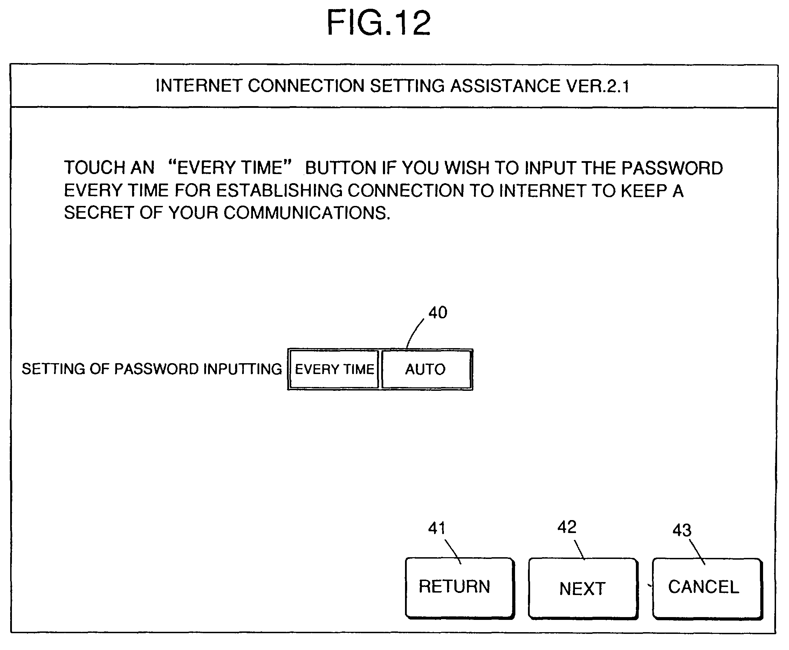

After inputting the ID password, the user touches a "NEXT" button 38 to open a password input setting screen of Fig. 12.

On the password input setting screen of Fig. 12, the user can select either of two options: one method is to manually input the ID password (Fig. 11) for every connection setting and the other method is to automatically input the password.

Once the option for manual input of the ID password at every time of connection was selected, the device requests the user to input the password at every time of the connection to the Internet, compares the inputted connection ID with the connection ID preset on the screen of Fig. 11 and allows the user to connect to the Internet when both IDs matched with each other. This makes it possible to maintain a secret of own connection information and mail information from any other person by prohibiting the connection to the Internet without inputting the ID password.

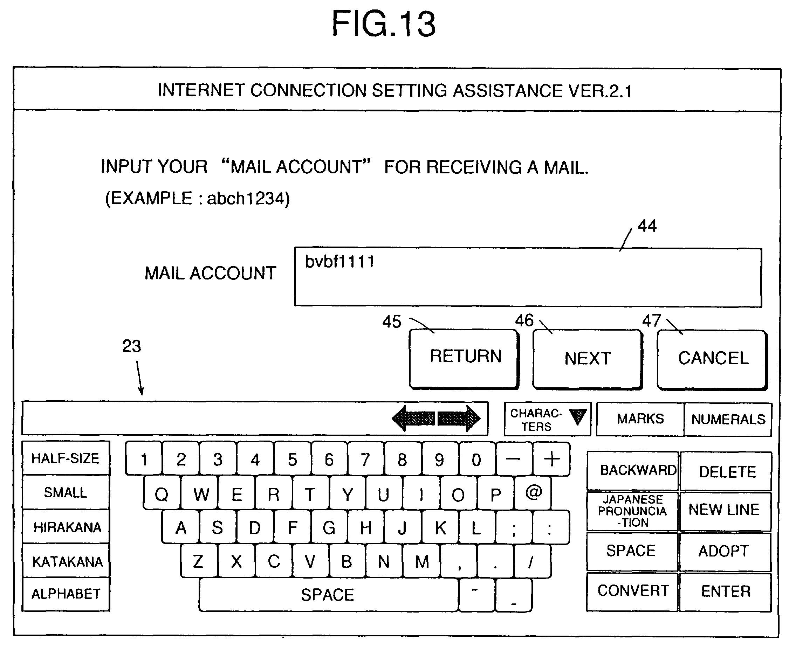

After selecting either of the above-mentioned options in the password input setting area 40, the user touches a "NEXT" button 42 to open a mail-account inputting screen of Fig. 13.

On the mail-account-inputting screen of Fig. 13, the user inputs in a mail-account inputting area 44 a mail account given by the provider or set by the user itself.

In this instance, the character inputting board 23 is of a typewriter inputting mode enabling the user to write characters in the input area by using the center keyboard thereof.

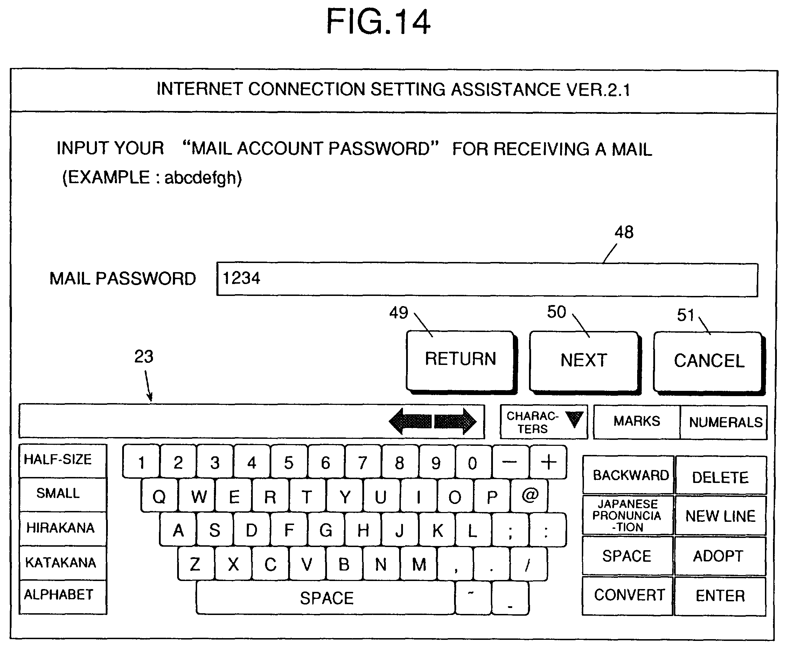

After inputting the mail account, the user touches a "NEXT" button 46 to open a mail-account-password-inputting screen of Fig. 14.

On the mail-account-password inputting screen of Fig. 14, the user inputs, in a password inputting area 48, a password corresponding to the mail account inputted on the screen of Fig. 13.

In this instance, the character inputting board 23 is of a typewriter inputting mode enabling the user to write characters in the input area by using the center keyboard thereof.

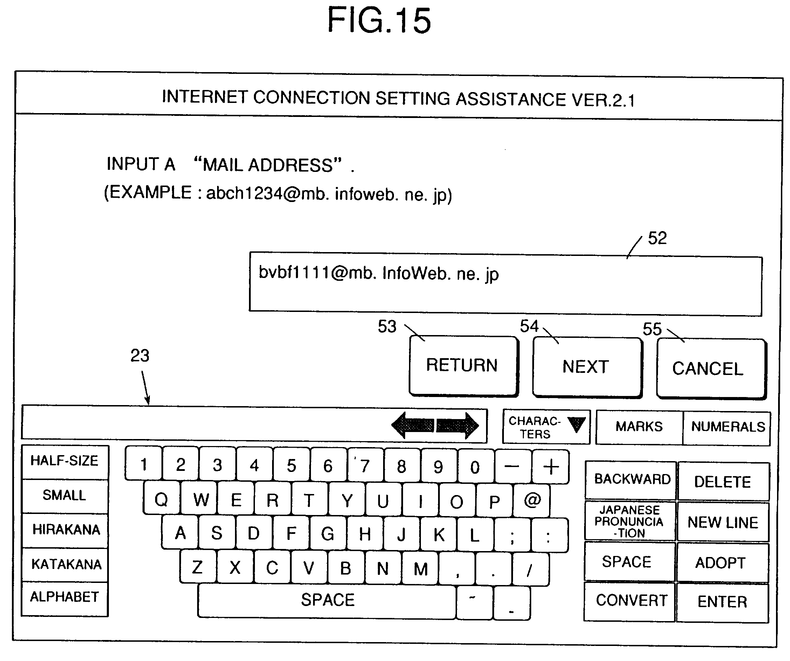

After inputting the mail-account password, the user touches a "NEXT" button 50 to open a mail-address-inputting screen of Fig. 15.

On the mail-address-inputting screen of Fig. 15, the user inputs in a mail-address inputting area 52 a mail address given by the provider or set by the user itself.

In this instance, the character inputting board 23 is of a typewriter inputting mode enabling the user to write characters in the input area by using the center keyboard thereof.

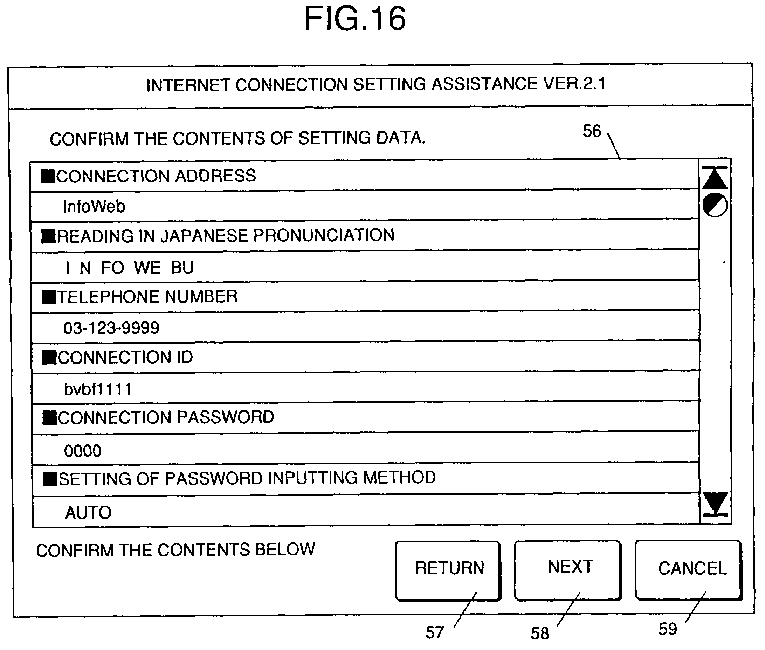

After inputting the mail address, the user touches a "NEXT" button 54 to open a set-data confirmation screen of Fig. 16.

On the set-data confirmation screen, the device requests the user to confirm the contents of setting made by the user through the screens of Figs. 5 to 15.

In case if any erroneous data was found on the screen, the user can conduct again the setting of data, previously returning to a preceding screen by touching a "RETURN" key 57.

The user touches a "NEXT" button 58 after confirming the correctness of the set data on the screen of Fig. 16.

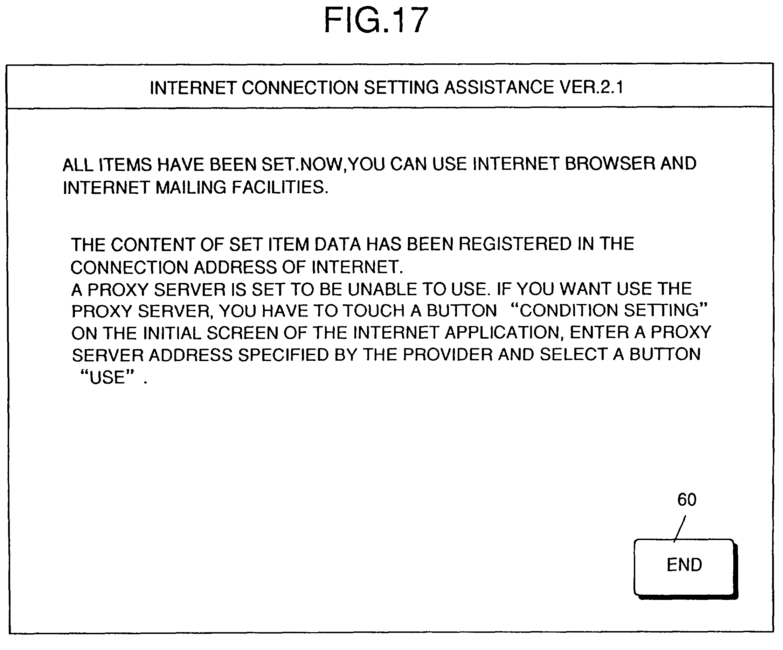

In response to the user's touch of the "NEXT" button 58, the communication device presents a setting completion confirming screen of Fig. 17 on the display portion.

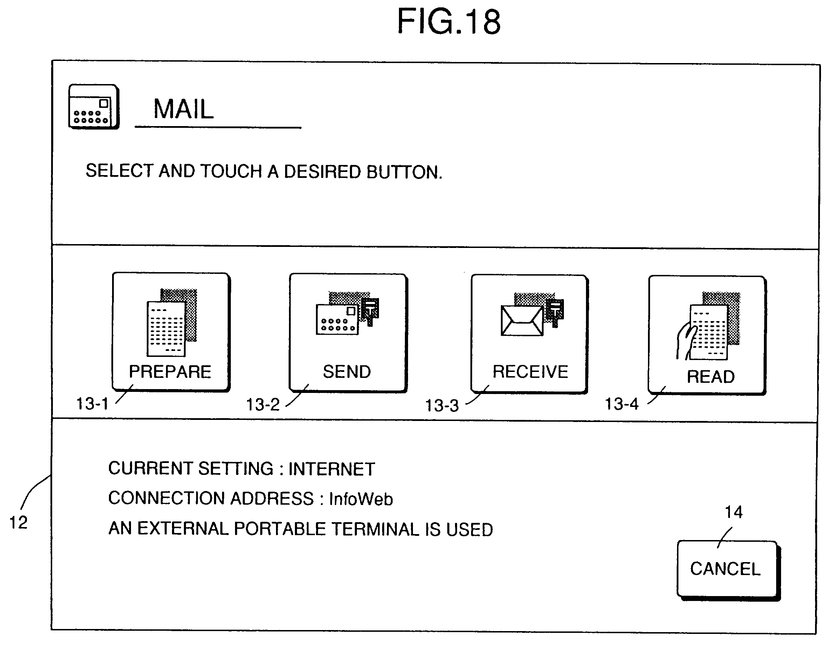

On the setting completion confirming screen of Fig. 17, the communication device informs the user of the completion of the setting procedure, finishes the Internet-connection-setting assisting mode when having detected a user's touch with an "END" key on the screen and restores the menu screen shown in Fig. 18 of the electronic mail application on the display portion.

On the menu screen of Fig. 18, there is presented a message indicating the current set-item (Internet), connection address (InfoWeb) and connection method in a message area 12.

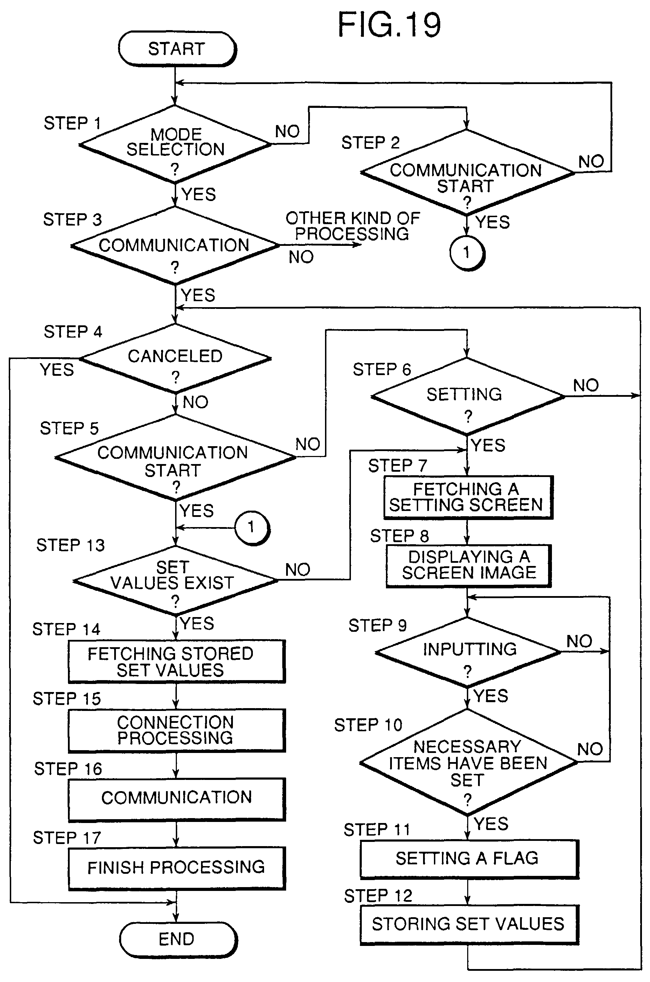

Fig. 19 is a flow chart depicting the communication procedure to be performed by a communication device according to an aspect of the present invention.

At Step 1, it is examined whether an another menu mode (not shown in Fig. 2) is selected by any one of fixed keys of the display portion of the communication device, which key is other than those shown on an initial screen being now displayed as shown in Fig. 2.

The procedure advances to Step 3 if the another menu mode was selected. If not, the procedure advances to Step 2 to examine whether a communication requesting function was selected by a user by touching a "SEND" button 11-2 or a "RECEIVE" button 11-3 of the electronic mail application on the initial screen of Fig. 2.

When the function requesting the communication was selected, the procedure jumps to Step 13. If not, the procedure returns to Step 1. (At this stage, function buttons, for instance 11-1 and 11-4, are not directly concerning the communication, which therefore are omitted from the scope of description). In the case when the selection of the another menu mode was recognized at Step 1, the procedure advances to Step 3 whereat it is examined whether the selected mode (e.g., mail application or Internet browser) is attended with the need for communication at Step 3.

If an application mode requiring the communication was not selected, the processing designated by the selected mode is conducted. When an application mode (e.g., a mail application) associated with the necessity of communication was selected, a mail application screen of Fig. 3 is displayed, then it is checked whether a "CANCEL" button 14 was pressed or not at Step 4.

The procedure is finished if the "CANCEL" button 14 was pressed.

If not, the procedure advances to Step 5 whereat it is judged whether a communication-start command was given by touching a "SEND" button 13-2 or "RECEIVE" button 13-3 on the screen of Fig. 3.

With the communication start command, the procedure advances to Step 13. If the command was not given, the procedure goes to Step 6 to examine whether a command for setting an Internet connection address is given for the selected not-shown menu option.

When the command for setting the Internet connection address was not given, the procedure advances to Step 14. When the command was given, the procedure advances to Step 7 whereat bit maps of Internet-connection-setting assisting screens (of Figs. 5 to 17) are subsequently read from a setting-screen memory 7-2 of a ROM 7.

At Step 9, it is examined whether the least necessary data for conducting communication (at Step 10) was all inputted by inputting data through the displayed screens of Figs. 5 to 17.

If the least necessary items for conducting the communication were not filled, the procedure returns to Step 9 to repeat the processing from Steps 9 to 10 until all the least necessary data is inputted.

The setting can be made by selecting and writing data on each of the setting screens subsequently read from the setting screen memory 7-2 of the ROM 7 and containing corresponding setting data read from the setting data memory 7-3 of the ROM 7. The details of the input operations to be made on the setting screens are omitted.

When the least necessary items have been inputted, a flag 8-3 in the RAM 8 is set to "1" at Step 11 to indicate that the least necessary data for conducting the communication have been set.

At Step 12, values set by Steps 8 to 10 are stored a connection setting memory 8-1 of the RAM 8. After this, the procedure returns to Step 4.

When a selected function was judged at Step 5 as associated with communication, it is examined at Step 13 whether the flag 8-3 of the RAM 8 is set to "1" and the data set for Internet connection is stored in the memory.

If the flag 8-3 of the RAM 8 was not set to "1", the procedure advances to Step 7. The processing for Internet connection setting is conducted through Steps 7 to 12.

When the Internet connection setting data has been stored in the memory, set values are read from the connection setting data memory 8-1 of the RAM 8 at Step 14.

At Step 15, processing of connecting a channel to an access point is conducted according to the fetched set values. Then, the communication is conducted at Step 16.

The communication processing at Step 16 is such as to transmit a prepared mail to a desired addressee when the user touched a "SEND" button 13-2 on the screen of Fig. 3 or to receive from a connected HOST a mail transmitted to own mail address when the user touched a "RECEIVE" button 13-3 on the screen.

On completion of the transmission and receipt of electronic mails, the communication is finished at Step 17 by cutting off the connection with the network.

According to aspects of the present invention, it is possible to provide communication devices and methods, which devices are easy and convenient for every user to use and can start communication with a desired distant terminal according to stored data if the data is least necessary for conducting the communication or can display, in absence of the store preset data, a menu and subsequent setting screens enabling beginners to easily setting the necessary communication conditions with no need of changing the setting modes, i.e., automatically turning over to a subsequent screen.

## Claims

1. A communication device connectable with another communication device over a communication line, comprising:
a display means (2) for displaying a menu for inputting communication conditions;
a condition input means (4) for inputting communication conditions according to an instruction of the menu displayed by the display means (2);
a storage means (7, 8) for storing communication conditions inputted by the condition input means (4);
a communication instruction means for instructing beginning of communication;
a detection means (6-3) for detecting a state of conditions stored in the storage means (7, 8) according to an instruction of beginning of communication from the communication instruction means; and
a control means (6) for controlling the communication device to begin communication under the conditions stored and detected by the detecting means (6-3) or drive the display means (2) to display a menu for inputting communication conditions when the absence of the preset communication conditions is detected.

2. A communication device as defined in claim 1, characterized in that a state of stored communication conditions is detected by a state of a flag set when storing communication conditions in the storage means (7, 8).

3. A communication method for communication with another communication device, comprising:
a displaying step of displaying a menu for inputting communication conditions;
a condition inputting step of inputting communication conditions according to instruction of the menu;
a storing step of storing communication conditions inputted at the condition inputting step;
a communication instructing step of instructing beginning of communication; and
a detecting step of detecting a state of conditions stored at the storing step according to an instruction of beginning of communication at the communication instructing step, and controlling the beginning of communication under the conditions stored and detected at the detecting step or conducting of the displaying step to display a menu for inputting communication conditions when the absence of preset communication conditions is detected.

4. A communication method as defined in claim 3, characterized in that a state of stored communication conditions is detected by a state of a flag set when storing communication conditions at the storing step.
